# EUROPÄISCHE PATENTSCHRIFT

(11) **EP 2 029 394 B1**
(45) Veröffentlichungstag und Bekanntmachung des Hinweises auf die Patenterteilung: **25.11.2009**
(21) Anmeldenummer: 07729502.0
(22) Anmeldetag: 25.05.2007
(51) Int. Cl.: B60R 11/02

(54) **BORDMONITOREINRICHTUNG**
MONITOR DEVICE ON BOARD
DISPOSITIF D'ÉCRAN DE BORD

(30) Priorität: 31.05.2006 DE 102006025383
(43) Veröffentlichungstag der Anmeldung: 04.03.2009
(73) Patentinhaber: Continental Automotive GmbH, 30165 Hannover (DE)
(72) Erfinder: KISSEL, Robert Wolfgang, 63329 Egelsbach (DE)
(86) Internationale Anmeldenummer: PCT/EP2007/055073
(87) Internationale Veröffentlichungsnummer: WO 2007/137996

(56) Entgegenhaltungen:
- EP-A- 1 308 348
- EP-A- 1 538 028
- EP-A1- 1 544 040
- WO-A-97/46422
- DE-A1- 10 008 887
- DE-A1- 19 938 690
- US-A1- 2002 101 091

## Beschreibung

Die Erfindung bezieht sich auf eine Bordmonitoreinrichtung für ein Kraftfahrzeug, mit einem Monitor, der mittels eines Antriebsmechanismus aus einer Inaktivlage in einer Ausnehmung einer Armaturentafel durch eine Öffnung der Ausnehmung in eine Aktivlage außerhalb der Ausnehmung sowie aus der Aktivlage in die Inaktivlage bewegbar antreibbar ist, wobei von dem Antriebsmechanismus bewegungsgekoppelt weiterhin eine die Öffnung in der Inaktivlage verschließende Abdeckung in eine in der Aktivlage die Öffnung freigebende Position bewegbar antreibbar ist.

Bei derartigen Bordmonitoreinrichtungen soll zusätzlich zu dem bewegbaren Monitor eine Abdeckung angetrieben werden, die nach Einfahren des Monitors in die Ausnehmung die Öffnung in der Armaturentafel verschließt bzw. vor dem Ausfahren des Monitors die Öffnung freigibt. Dabei müssen die Bewegungen von Abdeckung und Monitor so miteinander koordiniert werden, dass weder beim Öffnen noch beim Schließen der Abdeckung eine Kollision mit dem Monitor stattfinden kann. Dies erfordert, dass die Lage von Abdeckung und Monitor zu jedem Zeitpunkt der Bewegung und im Stillstand genau definiert ist.

Ein derartige Bordmoritoreinrichtung ist aus der DE 1000 8887A gemäß Oberbegriff des Anspruchs 1 bekannt. Bei einer Bordmonitoreinrichtung der eingangs genannten Art weist der Antriebsmechanismus von Monitor und Abdeckung eine Kulissenführung mit einem Klapp- und Schiebemechanismus auf, der von einem Antriebsmotor antreibbar ist.

Aufgabe der Erfindung ist es eine Bordmonitoreinrichtung der eingangs genannten Art zu schaffen, die eine geringe Baugröße aufweist und einen kollisionsfreien Bewegungsablauf von Monitor und Abdeckung gewährleistet.

Diese Aufgabe wird erfindungsgemäß dadurch gelöst, dass koaxial zu einer Achse nebeneinander eine feststehende Steuerscheibe, eine drehbar antreibbare Antriebsscheibe, eine frei drehbar gelagerte Abdeckungsabtriebsscheibe zum Bewegungsantrieb der Abdeckung und eine frei drehbar gelagerte Monitorabtriebsscheibe zum Bewegungsantrieb des Monitors angeordnet sind, wobei die Steuerscheibe eine Steuernut, die Antriebsscheibe eine radiale Mitnahmenut, die Abdeckungsantriebsscheibe eine Abdeckungsantriebsnut und die Monitorantriebsscheibe eine Monitorantriebsnut aufweist, mit einem sich parallel zur Achse erstreckenden, in die Steuernut, die Mitnahmenut, die Abdeckungsantriebsnut und die Monitorantriebsnut eingreifenden Koppelglied, wobei die Steuernut einem Verlauf besitzt, der dem kombinierten Verlauf von Abdeckungsantriebsnut und Monitorantriebsnut entspricht und Abdeckungsantriebsnut und Monitorantriebsnut den Bewegungsverlauf von Abdeckung und Monitor bestimmende, zur Achse konzentrische Freilaufbereiche und tangentiale Mitnahmebereiche aufweisen.

Durch diese Ausbildung mit drehbaren Scheiben kann ein sehr kompakter Aufbau erreicht werden, der auch nur einen geringen Einbauraum in der Armaturentafel benötigt.

Da von der Antriebsscheibe über das Koppelglied sowohl die Abdeckungsantriebsscheibe als auch die Monitorantriebsscheibe angetrieben werden, erfolgt ein zwangsweise aufeinander abgestimmter Antrieb von Abdeckung und Monitor, so dass eine Kollision dieser beiden Teilen sicher vermieden wird.

Gleichzeitig erfordert dadurch der Antrieb auch nur ein geringes Maß an Antriebsenergie.

In besonders einfacher, keine besondere Einbaulage erfordernden Ausbildung kann das Koppelelement ein Koppelzapfen zylindrischen Querschnitts sein, der die Steuernut, die Mitnahmenut, die Abdeckungsantriebsnut und die Monitorantriebsnut parallel zur Achse durchragt.

Ein Antrieb kann grundsätzlich auch manuell erfolgen. Komfortabel bei einfachem Aufbau ist es aber, wenn die Antriebsscheibe drehfest auf einer motorisch, insbesondere elektromotorisch drehbar antreibbaren Antriebswelle angeordnet ist.

Dabei wird bei einfachem Aufbau ein geringes Bauraumerfordernis erfüllt, wenn die Abdeckungsantriebsscheibe und/oder die Monitorantriebsscheibe frei drehbar auf der Antriebswelle gelagert sind.

Ein leichtgängiges Gleiten des Koppelgliedes ergibt sich dadurch, dass der Verlauf von Abdeckungsantriebsnut und Monitorantriebsnut ausgehend von einer Inaktivlage sich entgegen der Öffnungsbewegungsdrehrichtung der Antriebsscheibe bis in eine Aktivlage erstreckt.

Aus der Inaktivlage, in der der Monitor sich in der durch die Abdeckung verschlossenen Ausnehmung befindet, erfolgt zunächst eine Freigabe der Öffnung der Ausnehmung und ein sich anschließendes Ausfahren des Monitors, wenn die Monitorantriebsnut einen Verlauf aufweist, der beginnend in der Inaktivlage einen konzentrischen Freilaufbereich geringeren Radius aufweist, an den sich ein in einem Bereich größeren Radius in der Aktivlage endender Mitnahmebereich anschließt und dass die Abdeckungsantriebsnut einen Verlauf aufweist, der mit einem Mitnahmebereich beginnt, der sich aus der Inaktivlage im Bereich des geringeren Radius in den Bereich größeren Radius erstreckt und an den sich ein konzentrischer Freilaufbereich mit dem größeren Radius anschließt, der in der Aktivlage endet, wobei die Mitnahmebereiche von Monitorantriebsnut und Abdeckungsantriebsnut gleich sind.

In entgegen gesetzter Reihenfolge erfolgt dann auch ein Einfahren des Monitors und Schließen der Öffnung.

Eine symmetrische Kraftübertragung von dem Koppelglied auf die Abdeckungsscheiben und Monitorantriebsscheiben wird dadurch erreicht, dass jeweils durch einen zur Achse parallelen Steg miteinander verbunden parallel in einem Abstand zueinander zwei oder mehr Steuerscheiben und/oder zwei oder mehr Antriebsscheiben und/oder zwei oder mehr Abdeckungsantriebsscheiben und/oder zwei oder mehr Monitorantriebsscheiben angeordnet sind.

Damit kann es nicht zu Verkantungen und Kippen des Koppelgliedes in den Nuten kommen und die Kraftverluste bei der Bewegungsübertragung werden gering gehalten. Dies ermöglicht auch eine geringere Auslegung des Antriebes, was zu einer Verringerung des erforderlichen Bauraums führt.

Ein kompakter Aufbau mit einer sicheren verkippungsfreien Führung des Koppelgliedes an in einem größeren axialen Abstand voneinander angeordneten Steuernuten ergibt sich, wenn zwischen zwei durch einen Steg miteinander verbundene Steuerscheiben eine oder mehrere durch einen Steg miteinander verbundene Antriebsscheiben und eine oder mehrere durch einen Steg miteinander verbundene Abdeckungsantriebsscheiben und eine oder mehrere durch einen Steg miteinander verbundene Monitorantriebsscheiben axial geführt angeordnet sind.

Ein freies Bewegen der Abdeckungsantriebsscheibe und/oder der Monitorantriebsscheibe bei im Freilaufbereich befindlichem Koppelglied wird dadurch vermieden, dass die Abdeckungsantriebsscheibe und/oder die Monitorantriebsscheibe in der Endposition ihres Freilaufbereichs arretierbar sind.

Dazu kann in einfacher Ausbildung die Abdeckungsantriebsscheibe und/oder die Monitorantriebsscheibe an ihrem radial umlaufenden zur Achse konzentrischen Umfang eine Arretiervertiefung aufweisen, in die radial ein Arretiernocken eingreifbar ist, wobei der Arretiernocken auf einer zur Achse parallelen Nockenwelle angeordnet sein kann, die von der Antriebsscheibe drehbar antreibbar ist.

Dieser Aufbau ist bauraumsparend und in den Bewegungsablauf der Bordmonitoreinrichtung integriert.

Zum einfachen Bewegungsantrieb der Nockenwelle kann dabei die Antriebsscheibe einen radialen Schaltzahn aufweisen, der in eine Zahnlücke der Nockenwelle eingreifbar ist.

Eine Integration in den Bewegungsablauf aller Teile der Bordmonitoreinrichtung wird dadurch erreicht, dass auf einer gemeinsamen Nockenwelle entsprechend der Nebeneinanderanordnung von Antriebsscheibe, Abdeckungsantriebsscheibe und Monitorantriebsscheibe der Schaltzahn und die Arretiernocken für die Abdeckungsantriebsscheibe und die Monitorantriebsscheibe angeordnet sind.

Ein kompakter, wenige Bauteile erfordernder Aufbau ergibt sich dadurch, dass die Nockenwelle frei drehbar an der oder den Steuerscheiben gelagert ist.

Dabei kann die Nockenwelle in ihrer Position blockierbar sein, um ein ungewolltes selbsttätiges Verdrehen zu verhindern.

In einfacher Ausbildung besitzt dazu die Antriebsscheibe parallel neben dem Schaltzahn eine zur Achse konzentrische Umlaufkontur, die im Bereich des Zahns eine Ausnehmung aufweist, in der ein neben der Zahnlücke angeordneter Blockiernocken der Nockenscheibe frei drehbar eingreifbar ist, wobei die Flanken des Blockiernockens in der Außereingriffposition des Blockiernockens von der Ausnehmung tangential an der Umlaufkontur der Antriebsscheibe in Anlage ist.

Zum Antrieb der Abdeckungsantriebsscheibe kann die Abdeckungsantriebsscheibe einen zur Achse konzentrischen Zahnsektor aufweisen, der in ein Ritzel eines Antriebsstrangs zum Bewegungsantrieb der Abdeckung eingreift.

Ein Antrieb des Monitors kann auf einfache Weise dadurch erfolgen, dass die Monitorantriebsscheibe einen radialen Hebel aufweist, der mit seinem freien Ende an eine Antriebskoppel eines Antriebsstrangs zum Bewegungsantrieb des Monitors angelenkt ist.

Ein Ausführungsbeispiel der Erfindung ist in der Zeichnung dargestellt und wird im Folgenden näher beschrieben. Es zeigen:
- Figur 1: einen Querschnitt einer Bordmonitoreinrichtung in der Inaktivlage;
- Figur 2: die Bordmonitoreinrichtung nach Figur 1 mit geöffneter Abdeckung;
- Figur 3: die Bordmonitoreinrichtung nach Figur 1 mit teilausgefahrenem Monitor;
- Figur 4: die Bordmonitoreinrichtung nach Figur 1 in der Aktivlage;
- Figur 5: eine perspektivische Explosionsdarstellung von Antriebsmechanismus und Antriebsmotor der Bordmonitoreinrichtung nach Figur 1;
- Figur 6: eine perspektivische Ansicht des Antriebsmechanismus nach Figur 1;
- Figur 7: eine perspektivische Explosionsdarstellung des Antriebsmechanismus nach Figur 6;
- Figur 8: eine perspektivische Ansicht der Steuerscheiben des Antriebsmechanismus nach Figur 6;
- Figur 9: eine perspektivische Ansicht der Abdeckungsantriebsscheiben des Antriebsmechanismus nach Figur 6,
- Figur 10: eine perspektivische Ansicht der Monitorantriebsscheiben des Antriebsmechanismus nach Figur 6;
- Figur 11: eine perspektivische Ansicht der Nockenwelle des Antriebsmechanismus nach Figur 6;
- Figur 12: eine perspektivische Ansicht von Antriebsscheibe, Nockenwelle und Koppelzapfen des Antriebsmechanismus nach Figur 6;
- Figur 13: eine perspektivische Ansicht der Antriebsscheibe des Antriebsmechanismus nach Figur 6.

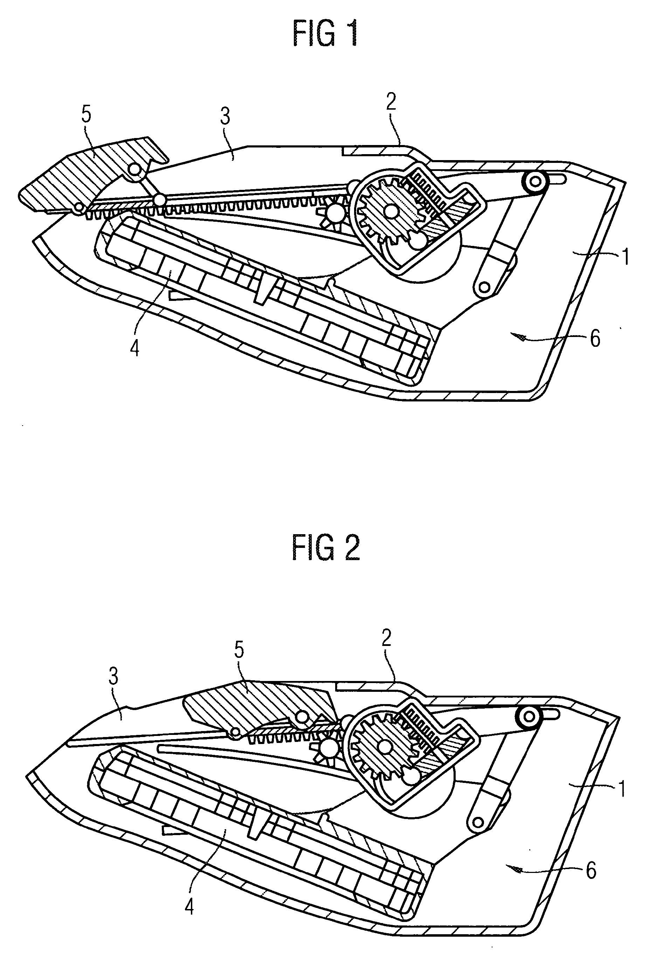

Die in den Figuren 1 bis 4 dargestellte Bordmonitoreinrichtung ist in einer Ausnehmung 1 einer Armaturentafel 2 angeordnet, wobei die Ausnehmung 1 eine Öffnung 3 besitzt, die in der in Figur 1 dargestellten Inaktivlage bei in die Ausnehmung 1 eingefahrenem Monitor 4 von einer Abdeckung 5 abgedeckt ist.

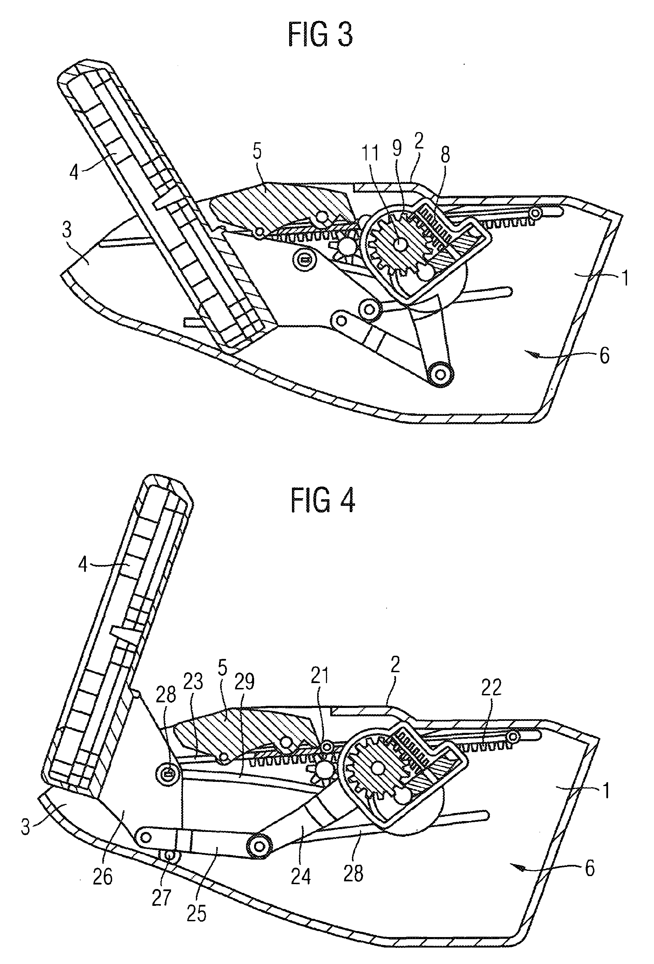

Von einem gemeinsamen Antriebsmechanismus 6 ist die Abdeckung 5 in eine die Öffnung 3 freigebende Position bewegbar antreibbar (Figur 2) und anschließen der Monitor 4 über eine Zwischenposition (Figur 3) in eine ausgefahrene Aktivlage bewegbar (Figur 4).

In dieser Aktivlage befindet sich der Monitor 4 in einer von einem Fahrer oder Beifahrer in einem Fahrzeug beobachtbaren Position.

In umgekehrter Reihenfolge sind Monitor 4 und Abdeckung 5 wieder in ihre Inaktivlage bewegbar antreibbar.

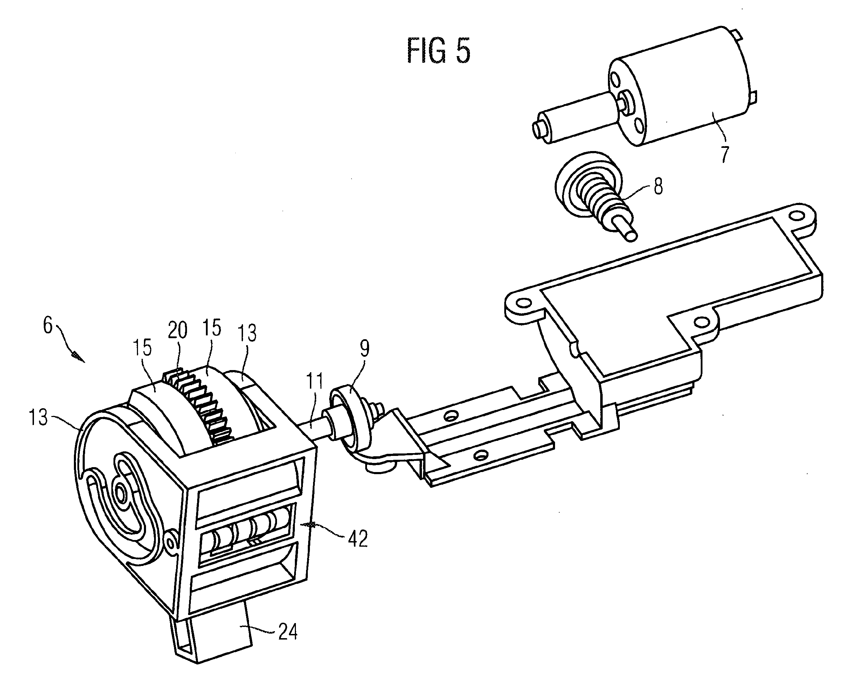

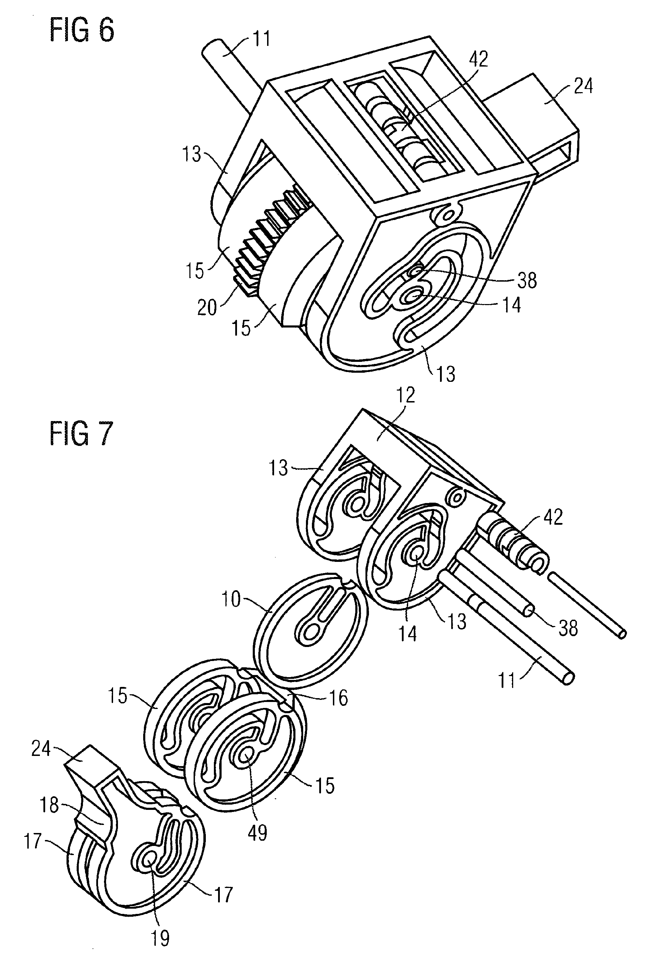

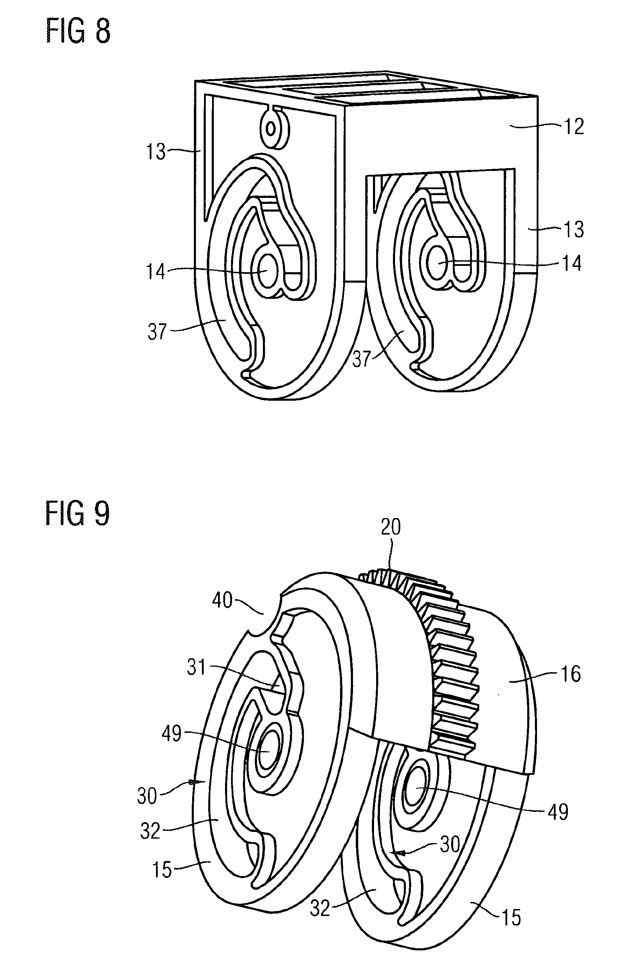

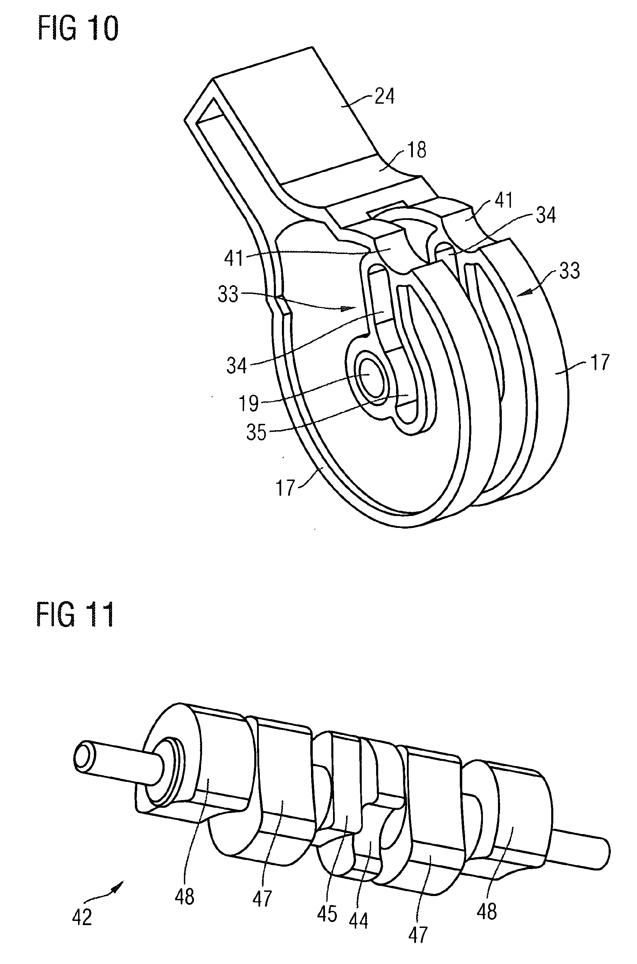

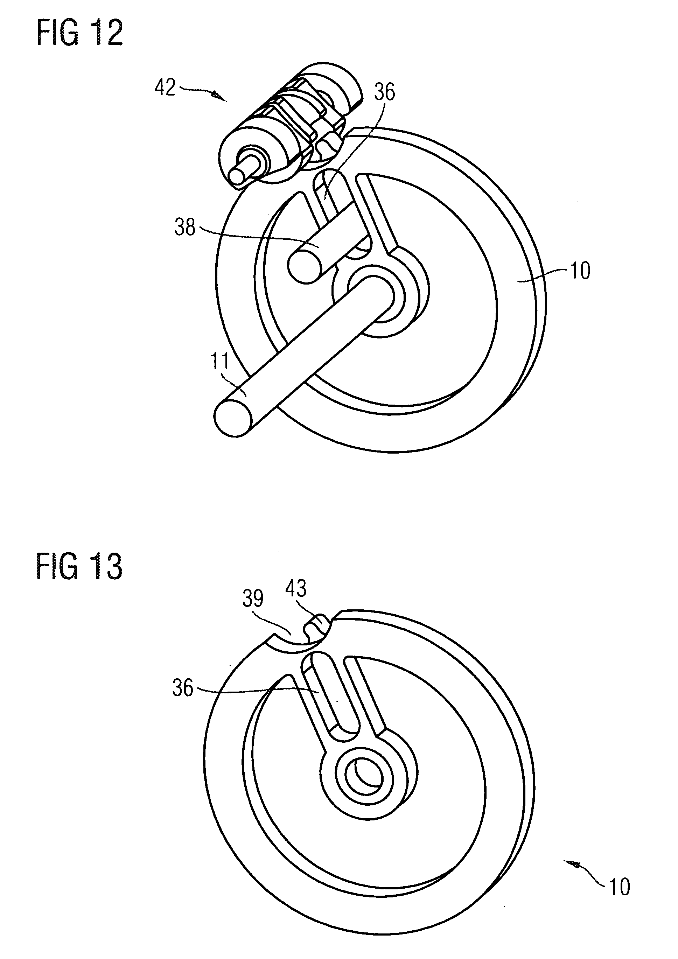

Zum Bewegungsantrieb wird von der Ausgangswelle eines reversierbaren Elektromotors 7 eine Spindelwelle 8 und von der Spindelwelle 8 ein Spindelrad 9 drehbar angetrieben, das drehfest auf einer um eine Achse drehbaren Antriebswelle 11 einer Antriebsscheibe 10 des in den Figuren 5 bis 13 näher dargestellten Antriebsmechanismus 6 angeordnet ist.

Der Antriebsmechanismus 6 weist zwei parallel in einem Abstand zueinander angeordnete identische Steuerscheiben 13 auf, die fest in der Ausnehmung 1 der Armaturentafel 2 angeordnet und an ihrem Rand durch einen Steg 12 zu einem hufeisenartigen Bauteil miteinander verbunden sind.

Quer zu ihrer Ebene werden die Steuerscheiben 13 von der Antriebswelle 11 durchragt, die in entsprechenden Lagebohrungen 14 der Steuerscheibe 13 drehbar gelagert ist.

Zwischen den beiden Steuerscheiben 13 sind zwei ebenfalls im Abstand zueinander angeordnete, identische Abdeckungsantriebsscheiben 15 angeordnet, die an ihrem Rand durch einen Steg 16 zu einem hufeisenartigen Bauteil miteinander verbunden sind.

Sie weisen mittig quer zu ihrer Ebene durchgehende Lagerbohrungen 49 auf, durch die die Antriebswelle 11 hindurchgeführt ist, auf der die Abdeckungsantriebsscheiben 15 frei drehbar gelagert sind.

Zwischen den beiden Abdeckungsantriebsscheiben 15 wiederum sind zwei im Abstand zueinander angeordnete, identische Monitorantriebsscheiben 17 angeordnet, die an ihrem Rand durch einen Steg 18 zu einem hufeisenartigen Bauteil miteinander verbunden sind.

Auch sie weisen mittig quer zu ihrer Ebene durchgehende Lagerbohrungen 19 auf, mit denen sie frei drehbar auf der Antriebswelle 11 gelagert sind.

In dem Abstand zwischen den Monitorantriebsscheiben 17 ist die Antriebsscheibe 10 angeordnet, so dass die Steuerscheiben 13, die Abdeckungsantriebsscheiben 15, die Monitorantriebsscheiben 17 und die Antriebsscheibe 10 ein sandwichartiges Paket bilden.

Die Abdeckungsantriebsscheiben 15 weisen an ihrem peripher umlaufenden Randbereich einen zur Antriebswelle 11 konzentrischen Zahnsektor 20 auf, der in ein Ritzel 21 eingreift, von dem eine in einer Führungsnut 23 in der Wand der Ausnehmung 1 geführte Zahnstange 22 linear bewegbar antreibbar ist.

An der Zahnstange 22 ist wiederum die Abdeckung 5 angeordnet, die durch die Linearbewegung der Zahnstange 22 zwischen der die Öffnung 3 abdeckenden und der die Öffnung 3 freigebenden Position bewegbar antreibbar ist.

Die Monitorantriebsscheiben 17 besitzen an ihrem peripher umlaufenden Randbereich im Bereich des Steges 18 einen radial nach außen ragenden Hebel 24, der mit seinem freien Ende an dem einen Ende eines Koppelhebels 25 angelenkt ist.

Mit seinem etwa zur Öffnung 3 gerichteten anderen Ende ist der Koppelhebel 25 an einem Führungsteil 26 angelenkt, das an der Rückseite des Monitors 4 befestigt ist und rechtwinklig von der Rückseite des Monitors 4 wegragt.

In der Bewegungsebene von Hebel 24 und Koppelhebel 25 im Abstand zueinander ist das Führungsteil 26 mit Führungselementen 27 in einer zweiten Führungsnut 28 und einer dritten Führungsnut 29 in der Wand der Ausnehmung 1 linear bewegbar geführt.

Dabei erstreckt sich die zweite Führungsnut 28 etwa parallel zur ersten Führungsnut 23, während die zwischen der ersten Führungsnut 23 und der zweiten Führungsnut 28 angeordnete dritte Führungsnut 29 zur Öffnung 3 hin einen entgegen der zweiten Führungsnut 28 zunehmenden Abstand aufweist.

Durch den Hebel 24 der Monitorantriebsscheibe 25 ist das Führungsteil 26 mit seinen Führungselementen 27 zwischen den Enden der zweiten Führungsnut 28 und der dritten Führungsnut 29 bewegbar, wodurch der Monitor 4 sowohl in Erstreckungsrichtung der zweiten und dritten Führungsnuten 28 und 29 bewegbar, als auch durch die Divergenz der beiden Führungsnuten 28 und 29 zwischen einer etwa waagrechten Position in der Inaktivlage und einer senkrechten Position in der Aktivlage schwenkbar antreibbar ist.

In den Abdeckungsantriebsscheiben 15 sind axial durchgehende, einander axial gegenüberliegende identische Abdeckungsantriebsnuten 30 ausgebildet, die aus einem tangentialen Mitnahmebereich 31 und einem zur Achse der Antriebswelle 11 konzentrischen Freilaufbereich 32 bestehen.

Dabei weisen die Abdeckungsantriebsnuten 30 einen Verlauf auf, der mit dem Mitnahmebereich 31 beginnt, welcher sich aus der Inaktivlage im Bereich eines geringeren Radius in einen Bereich größeren Radius erstreckt und an den sich der Freilaufbereich 32 mit dem größeren Radius anschließt, der in der Aktivlage endet.

In den Monitorantriebsscheiben 17 sind ebenfalls axial durchgehende, einander axial gegenüberliegende identische Monitorantriebsnuten 33 ausgebildet, die aus einem tangentialen Mitnahmebereich 34 und einem zur Achse der Antriebswelle 11 konzentrischen Freilaufbereich 35 bestehen.

Der Verlauf der Monitorantriebsnuten 33 beginnt in der Inaktivlage mit dem Freilaufbereich 35 geringeren Radius, an den sich der in einem Bereich größere Radius in der Aktivlage endende Mitnahmebereich 34 anschließt.

Es versteht sich, dass zur Variation des Bewegungsverlaufes entsprechend die Mitnahmebereiche 31 und 34, die Freilaufbereiche 32 und 35 sowie die Übergänge von den Mitnahmebereichen 31 und 34 zu den Freilaufbereichen 32 und 35 mit Variationen ausgestaltet sein können.

Die drehfest auf der Antriebswelle 11 angeordnete Antriebsscheibe 10 weist eine radiale Mitnahmenut 36 auf, die sich mindestens zwischen dem geringeren Radius und dem größeren Radius von Abdeckungsantriebsnuten 30 und Monitorantriebsnuten 33 erstreckt.

In den Steuerscheiben 13 sind auch axial durchgehenden, einander axial gegenüberliegende identische Steuernuten 37 ausgebildet, deren Verlauf einem kombinierten Verlauf von Abdeckungsantriebsnuten 30 und Monitorantriebsnuten 33 entspricht, wobei sich ein Teil dieser Nuten, nämlich deren Mitnahmebereiche 31 und 36 überdecken.

Parallel zur Antriebswelle 11 werden die gleiche Breite aufweisenden Steuernuten 37, Mitnahmenut 36, Abdeckungsantriebsnuten 30 und Monitorantriebsnuten 33 von einem Koppelzapfen 38 entsprechenden zylindrischen Querschnitts durchragt, der bei einem Drehantrieb der Antriebsscheibe 10 entlang dem Verlauf der Steuernuten 37 sich bewegt, wobei er in den Mitnahmebereichen 31 und 34 die Abdeckungsantriebsscheibe 15 bzw. die Monitorantriebsscheibe 17 zu einer Drehbewegung mitnimmt und in den Freilaufbereichen 32 und 35 sich ohne Mitnahme der Abdeckungsantriebsscheiben 15 bzw. Monitorantriebsscheiben 17 frei bewegt.

Dadurch wird der in den Figuren 1 bis 4 dargestellte, aufeinander abgestimmte Bewegungsverlauf von Abdeckung 5 und Monitor 4 erzeugt.

An dem konzentrischen Umfang der Antriebsscheibe 10 ist eine halbkreisförmige, radial nach außen offene Ausnehmung 39 ausgebildet. Axial neben der Arretiervertiefung 39 weist die Antriebsscheibe 10 einen radial neben den Bereich der Arretiervertiefung 39 ragenden Schaltzahn 43 auf.

Zu der Ausnehmung 39 gleichartige Arretiervertiefungen 40 und 41 sind auch an den Abdeckungsantriebsscheiben 15 und den Monitorantriebsscheiben 17 ausgebildet.

Im Bereich des Stegs 12 der Steuerscheiben 13 ist eine zur Achse der Antriebswelle 11 parallele Nockenwelle 42 frei drehbar an den Steuerscheiben 13 gelagert. In dem dem Schaltzahn 43 radial gegenüber liegenden Bereich weist die Nockenwelle 42 eine Zahnlücke 44 auf, in die der Schaltzahn 43 bei Drehung der Antriebsscheibe 10 eingreifen und die Nockenwelle 42 verdrehen kann.

Während dieser Drehung durchläuft ein der Ausnehmung 39 radial gegenüberliegender Blockiernocken 45 frei die Ausnehmung 39 um nach Beendigung des Drehantriebs der Nockenwelle 42 durch den Schaltzahn 43 mit einer seiner Flanken 46 an der Umlaufkontur der Antriebsscheibe 10 in Anlage zu sein. Damit kann sich die Antriebsscheibe 10 zwar drehen, die Nockenscheibe 42 wird aber an einer Drehung gehindert.

Den Arretiervertiefungen 40 und 41 radial gegenüberliegend sind an der Nockenwelle 42 entsprechende Arretiernocken 47 und 48 angeordnet, die bei Verdrehen der Nockenwelle 42 in die jeweils zugeordneten Arretiervertiefungen 40 und 41 eingreifen und damit die Abdeckungsantriebsscheiben 15 bzw. Monitorantriebsscheiben 17 gegen Verdrehen arretieren können.

Die Arretiervertiefungen 40 der Abdeckungsantriebsscheiben 15 und die ihnen zugeordneten Arretiernocken 47 der Nockenwelle 42 sind so angeordnet, dass bei Erreichen des Endes des Freilaufbereichs 32 die Arretiernocken 47 in die Arretiervertiefungen 40 eingreifen und die Abdeckungsantriebsscheiben 15 arretieren.

Entsprechend sind die Arretiervertiefungen 41 der Monitorantriebsscheiben 17 und die ihnen zugeordneten Arretiernocken 48 der Nockenwelle 42 so angeordnet, dass sie bei Erreichen des Endes des Freilaufbereichs 35 die Arretiernocken 48 in die Arretiervertiefungen 41 eingreifen und die Monitorantriebsscheiben 17 arretieren.

## Patentansprüche

1. Bordmonitoreinrichtung für ein Kraftfahrzeug, mit einem Monitor, der mittels eines Antriebsmechanismus aus einer Inaktivlage in einer Ausnehmung einer Armaturentafel durch eine Öffnung der Ausnehmung in eine Aktivlage außerhalb der Ausnehmung sowie aus der Aktivlage in die Inaktivlage bewegbar antreibbar ist, wobei von dem Antriebsmechanismus bewegungsgekoppelt weiterhin eine die Öffnung in der Inaktivlage verschließende Abdeckung in eine in der Aktivlage die Öffnung freigebende Position bewegbar antreibbar ist, **dadurch gekennzeichnet, dass** koaxial zu einer Achse nebeneinander eine feststehende Steuerscheibe (13), eine drehbar antreibbare Antriebsscheibe (10), eine frei drehbar gelagerte Abdeckungsabtriebsscheibe (15) zum Bewegungsantrieb der Abdeckung (5) und eine frei drehbar gelagerte Monitorabtriebsscheibe (17) zum Bewegungsantrieb des Monitors (4) angeordnet sind, wobei die Steuerscheibe (13) eine Steuernut (37), die Antriebsscheibe (10) eine radiale Mitnahmenut (36), die Abdeckungsantriebsscheibe (15) eine Abdeckungsantriebsnut (30) und die Monitorantriebsscheibe (17) eine Monitorantriebsnut (33) aufweist, mit einem sich parallel zur Achse erstreckenden, in die Steuernut (37), die Mitnahmenut (36), die Abdeckungsantriebsnut (30) und die Monitorantriebsnut (33) eingreifenden Koppelglied, wobei die Steuernut (37) einem Verlauf besitzt, der dem kombinierten Verlauf von Abdeckungsantriebsnut (30) und Monitorantriebsnut (33) entspricht und Abdeckungsantriebsnut (30) und Monitorantriebsnut (33) den Bewegungsverlauf von Abdeckung (5) und Monitor (4) bestimmende, zur Achse konzentrische Freilaufbereiche (32, 35) und tangentiale Mitnahmebereiche (31, 34) aufweisen.

2. Bordmonitoreinrichtung nach Anspruch 1, **dadurch gekennzeichnet, dass** das Koppelelement ein Koppelzapfen (38) zylindrischen Querschnitts ist, der die Steuernut (37), die Mitnahmenut (36), die Abdeckungsantriebsnut (30) und die Monitorantriebsnut (33) parallel zur Achse durchragt.

3. Bordmonitoreinrichtung nach einem der vorhergehenden Ansprüche, **dadurch gekennzeichnet, dass** die Antriebsscheibe (10) drehfest auf einer motorisch, insbesondere elektromotorisch drehbar antreibbaren Antriebswelle (11) angeordnet ist.

4. Bordmonitoreinrichtung nach Anspruch 3, **dadurch gekennzeichnet, dass** die Abdeckungsantriebsscheibe (15) und/oder die Monitorantriebsscheibe (17) frei drehbar auf der Antriebswelle (11) gelagert sind.

5. Bordmonitoreinrichtung nach einem der vorhergehenden Ansprüche, **dadurch gekennzeichnet, dass** der Verlauf von Abdeckungsantriebsnut (30) und Monitorantriebsnut (33) ausgehend von einer Inaktivlage sich entgegen der Öffnungsbewegungsdrehrichtung der Antriebsscheibe (10) bis in eine Aktivlage erstreckt.

6. Bordmonitoreinrichtung nach Anspruch 5, **dadurch gekennzeichnet, dass** die Monitorantriebsnut (33) einen Verlauf aufweist, der beginnend in der Inaktivlage einen konzentrischen Freilaufbereich (35) geringeren Radius aufweist, an den sich ein in einem Bereich größeren Radius in der Aktivlage endender Mitnahmebereich (34) anschließt und dass die Abdeckungsantriebsnut (30) einen Verlauf aufweist, der mit einem Mitnahmebereich (31) beginnt, der sich aus der Inaktivlage im Bereich des geringeren Radius in den Bereich größeren Radius erstreckt und an den sich ein konzentrischer Freilaufbereich (32) mit dem größeren Radius anschließt, der in der Aktivlage endet, wobei die Mitnahmebereiche (31, 34) von Monitorantriebsnut (33) und Abdeckungsantriebsnut (30) gleich sind.

7. Bordmonitoreinrichtung nach einem der vorhergehenden Ansprüche, **dadurch gekennzeichnet, dass** jeweils durch einen zur Achse parallelen Steg (12, 16, 18) miteinander verbunden parallel in einem Abstand zueinander zwei oder mehr Steuerscheiben (13) und/oder zwei oder mehr Antriebsscheiben und/oder zwei oder mehr Abdeckungsantriebsscheiben (15) und/oder zwei oder mehr Monitorantriebsscheiben (17) angeordnet sind.

8. Bordmonitoreinrichtung nach Anspruch 7, **dadurch gekennzeichnet, dass** zwischen zwei durch einen Steg (12) miteinander verbundene Steuerscheiben (13) eine oder mehrere durch einen Steg miteinander verbundene Antriebsscheiben (10) und eine oder mehrere durch einen Steg (16) miteinander verbundene Abdeckungsantriebsscheiben (15) und eine oder mehrere durch einen Steg (18) miteinander verbundene Monitorantriebsscheiben (17) axial geführt angeordnet sind.

9. Bordmonitoreinrichtung nach einem der vorhergehenden Ansprüche, **dadurch gekennzeichnet, dass** die Abdeckungsantriebsscheibe (15) und/oder die Monitorantriebsscheibe (17) in der Endposition ihres Freilaufbereichs (32, 35) arretierbar ist.

10. Bordmonitoreinrichtung nach Anspruch 9, **dadurch gekennzeichnet, dass** die Abdeckungsantriebsscheibe (15) und/oder die Monitorantriebsscheibe (17) an ihrem radial umlaufenden zur Achse konzentrischen Umfang eine Arretiervertiefung (40, 41) aufweist, in die radial ein Arretiernocken (47, 48) eingreifbar ist.

11. Bordmonitoreinrichtung nach Anspruch 10, **dadurch gekennzeichnet, dass** der Arretiernocken (47, 48) auf einer zur Achse parallelen Nockenwelle (42) angeordnet ist, die von der Antriebsscheibe (10) drehbar antreibbar ist.

12. Bordmonitoreinrichtung nach Anspruch 11, **dadurch gekennzeichnet, dass** die Antriebsscheibe (10) einen radialen Schaltzahn (43) aufweist, der in eine Zahnlücke (44) der Nockenwelle (42) eingreifbar ist.

13. Bordmonitoreinrichtung nach den Ansprüchen 11 und 12,
**dadurch gekennzeichnet, dass** auf einer gemeinsamen Nockenwelle (42) entsprechend der Nebeneinanderanordnung von Antriebsscheibe (10), Abdeckungsantriebsscheibe (15) und Monitorantriebsscheibe (17) der Schaltzahn (43) und die Arretiernocken (47, 48) für die Abdeckungsantriebsscheibe (15) und die Monitorantriebsscheibe (17) angeordnet sind.

14. Bordmonitoreinrichtung nach einem der Ansprüche 11 bis 13, **dadurch gekennzeichnet, dass** die Nockenwelle (42) frei drehbar an der oder den Steuerscheiben (13) gelagert ist.

15. Bordmonitoreinrichtung nach einem der Ansprüche 9 bis 14,
**dadurch gekennzeichnet, dass** die Antriebsscheibe (10) parallel neben dem Schaltzahn (43) eine zur Achse konzentrische Umlaufkontur besitzt, die im Bereich des Schaltzahns (43) eine Ausnehmung (39) aufweist, in der ein neben der Zahnlücke (44) angeordneter Blockiernocken (45) der Nockenwelle (42) frei drehbar eingreifbar ist, wobei die Flanken (46) des Blockiernockens (45) in der Außereingriffposition des Blockiernockens (45) von der Ausnehmung (39) tangential an der Umlaufkontur der Antriebsscheibe (10) in Anlage sind.

16. Bordmonitoreinrichtung nach einem der vorhergehenden Ansprüche, **dadurch gekennzeichnet, dass** die Abdeckungsantriebsscheibe (15) einen zur Achse konzentrischen Zahnsektor (20) aufweist, der in ein Ritzel (21) eines Antriebsstrangs zum Bewegungsantrieb der Abdeckung (5) eingreift.

17. Bordmonitoreinrichtung nach einem der vorhergehenden Ansprüche, **dadurch gekennzeichnet, dass** die Monitorantriebsscheibe (17) einen radialen Hebel (24) aufweist, der mit seinem freien Ende an eine Antriebskoppel (25) eines Antriebsstrangs zum Bewegungsantrieb des Monitors (4) angelenkt ist.

## Claims

1. On-board monitor device for a monitor vehicle, having a monitor which can be moved in a driven fashion by means of a drive mechanism from an inactive position in a recess in a dashboard through an opening in the recess into an active position outside the recess, and from the active position into the inactive position, wherein furthermore a cover which closes the opening in the inactive position can be moved in a driven fashion, coupled in terms of movement, by the drive mechanism into a position which clears the opening in the active position, **characterized in that** arranged one next to the other coaxially with respect to an axis are a fixed control cam (13), a rotatably drivable drive disk (10), a freely rotatably mounted cover output disk (15) for the movement drive of the cover (5) and a freely rotatably mounted monitor output disk (17) for the movement drive of the monitor (4), wherein the control cam (13) has a control groove (37), the drive disk (10) has a radial driving groove (36), the cover drive disk (15) has a cover drive groove (30) and the monitor drive disk (17) has a monitor drive groove (33), having a coupling element which extends parallel to the axis and engages in the control groove (37), the driving groove (36), the cover drive groove (30) and the monitor drive groove (33), wherein the control groove (37) has a profile which corresponds to the combined profile of the cover drive groove (30) and the monitor drive groove (33), and the cover drive groove (30) and monitor drive groove (33) have freewheeling regions (32, 35), which determine the movement profile of the cover (5) and monitor (4) and are concentric with respect to the axis, and tangential driving regions (31, 34).

2. On-board monitor device according to Claim 1,
**characterized in that** the coupling element is a coupling spigot (38) with a cylindrical cross section which penetrates the control groove (37), the driving groove (36), the cover drive groove (30) and the monitor drive groove (33) parallel to the axis.

3. On-board monitor device according to one of the preceding claims, **characterized in that** the drive disk (10) is arranged in a rotationally fixed fashion on a drive shaft (11) which can be driven in rotation by motor, in particular by electric motor.

4. On-board monitor device according to Claim 3,
**characterized in that** the cover drive disk (15) and/or the monitor drive disk (17) are mounted in a freely rotatable fashion on the drive shaft (11).

5. On-board monitor device according to one of the preceding claims, **characterized in that** the profile of the cover drive groove (30) and monitor drive groove (33) extends starting from an inactive position into an active position, counter to the opening movement rotational direction of the drive disk (10).

6. On-board monitor device according to Claim 5,
**characterized in that** the monitor drive groove (33) has a profile which, beginning in the inactive position, has a concentric freewheeling region (35) with a relatively small radius which is adjoined by a driving region (34) which ends in a region with a relatively large radius in the active position, and **in that** the cover drive groove (30) has a profile which begins with a driving region (31) which extends from the inactive position in the region with the relatively small radius into the region with the relatively large radius and is adjoined by a concentric freewheeling region (32) with the relatively large radius which ends in the active position, wherein the driving regions (31, 34) of the monitor drive groove (33) and cover drive groove (30) are the same.

7. On-board monitor device according to one of the preceding claims, **characterized in that** two or more control cams (13) and/or two or more drive disks and/or two or more cover drive disks (15) and/or two or more monitor drive disks (17) are each arranged parallel to one another at a distance, connected by a web (12, 16, 18) which is parallel to the axis.

8. On-board monitor device according to Claim 7,
**characterized in that** one or more drive disks (10) which are connected to one another by means of a web and one or more cover drive disks (15) which are connected to one another by means of a web (16) and one or more monitor drive disks (17) which are connected to one another by means of a web (18) are arranged guided axially between two control cams (13) which are connected to one another by means of a web (12).

9. On-board monitor device according to one of the preceding claims, **characterized in that** the cover drive disk (15) and/or the monitor drive disk (17) can be locked in the end position of its freewheeling region (32, 35).

10. On-board monitor device according to Claim 9, **characterized in that** the cover drive disk (15) and/or the monitor drive disk (17) has, on their radially extending circumference, concentric to the axis, a locking depression (40, 41) into which a locking cam (47, 48) can engage radially.

11. On-board monitor device according to Claim 10, **characterized in that** the locking cam (47, 48) is arranged on a cam shaft (42) which is parallel to the axis and can be driven in rotation by the drive disk (10).

12. On-board monitor device according to Claim 11, **characterized in that** the drive disk (10) has a radial switching tooth (43) which can engage in a tooth gap (44) of the cam shaft (42).

13. On-board monitor device according to Claims 11 and 12, **characterized in that** the switching tooth (43) and the locking cams (47, 48) for the cover drive disk (15) and the monitor drive disk (17) are arranged on a common cam shaft (42) corresponding to the arrangement of the drive disk (10), cover drive disk (15) and monitor drive disk (17) one next to the other.

14. On-board monitor device according to one of Claims 11 to 13, **characterized in that** the cam shaft (42) is freely rotatably mounted on the control cam (13) or control cams (13).

15. On-board monitor device according to one of Claims 9 to 14, **characterized in that** the drive disk (10) has, parallel next to the switching tooth (43), a circumferential contour which is concentric with respect to the axis and has, in the region of the switching tooth (43), a recess (39) in which a blocking cam (45), arranged next to the tooth gap (44), of the cam shaft (42) can engage in a freely rotatable fashion, wherein the edges (46) of the blocking cam (45) are in abutment in the external engagement position of the blocking cam (45) of the recess (39) tangentially on the circumferential contour of the drive disk (10).

16. On-board monitor device according to one of the preceding claims, **characterized in that** the cover drive disk (15) has a tooth sector (20) which is concentric with respect to the axis and which engages in a pinion (21) of a drive train for the movement drive of the cover (5).

17. On-board monitor device according to one of the preceding claims, **characterized in that** the monitor drive disk (17) has a radial lever (24) which is coupled in an articulated fashion at its free end to a drive coupling (25) of a drive train for the movement drive of the monitor (4).

## Revendications

1. Système pour écran de bord dans un véhicule automobile, comprenant un écran qui peut, au moyen d'un mécanisme d'entraînement, se déplacer à partir d'une position inactive, où il se trouve dans un évidement d'un tableau de bord, à travers une ouverture de l'évidement, vers une position active, où il se trouve à l'extérieur de l'évidement, ainsi que se déplacer, à partir de la position active, vers la position inactive, où, en outre, un couvercle, qui est couplé dynamiquement au mécanisme d'entraînement et qui ferme l'ouverture dans la position inactive, peut se déplacer dans une position dans laquelle il libère l'ouverture dans la position active, **caractérisé par le fait que**, coaxialement à un axe, sont disposés l'un à côté de l'autre, un disque de commande fixe (13), un disque d'entraînement (10) commandé en rotation, un disque attaqué (15) monté en rotation libre et destiné à entraîner dynamiquement le couvercle (5) et un disque attaqué (17) monté en rotation libre et destiné à entraîner dynamiquement l'écran (4), le disque de commande (13) comportant une gorge de commande (37), le disque d'entraînement (10), une gorge radiale d'entraînement (36), le disque d'entraînement (15) du couvercle, une gorge d'entraînement (30) du couvercle et le disque d'entraînement (17) de l'écran, une gorge d'entraînement (33) de l'écran, où un organe de couplage parallèle à l'axe s'engage dans la gorge de commande (37), dans la gorge d'entraînement (36), dans la gorge d'entraînement (30) du couvercle et dans la gorge d'entraînement (33) de l'écran, où la gorge de commande (37) a un développement qui correspond au développement combiné de la gorge d'entraînement (30) du couvercle et de la gorge d'entraînement (33) de l'écran et où la gorge d'entraînement (30) du couvercle et la gorge d'entraînement (33) de l'écran ont des zones (32, 35) de course libre concentriques à l'axe et des zones (31, 34) tangentielles d'entraînement, lesquelles déterminent la trajectoire de déplacement du couvercle (5) et de l'écran (4).

2. Système pour écran de bord selon la revendication 1, **caractérisé par le fait que** l'organe de couplage est un tourillon de couplage (38) à section cylindrique qui fait saillie parallèlement à l'axe à travers la gorge de commande (37), la gorge d'entraînement (36), la gorge d'entraînement (30) du couvercle et la gorge d'entraînement (33) de l'écran.

3. Système pour écran de bord selon l'une des revendications précédentes, **caractérisé par le fait que** le disque d'entraînement (10) est monté en blocage de rotation sur un arbre d'entraînement (11) commandé en rotation par un moteur, notamment par un moteur électrique.

4. Système pour écran de bord selon la revendication 3, **caractérisé par le fait que** le disque d'entraînement (15) du couvercle et/ou le disque d'entraînement (17) de l'écran sont montés en rotation libre sur l'arbre d'entraînement (11).

5. Système pour écran de bord selon l'une des revendications précédentes, **caractérisé par le fait que** le tracé de la gorge d'entraînement (30) du couvercle et de la gorge d'entraînement (33) de l'écran se développe, en partant d'une position inactive, à l'inverse du sens de rotation de l'ouverture du disque d'entraînement (10), jusque dans une position active.

6. Système pour écran de bord selon la revendication 5, **caractérisé par le fait que** la gorge d'entraînement (33) de l'écran a un tracé qui a, en commençant dans la position inactive, une zone concentrique de course libre (35) dont le rayon est plus faible et qui est suivie d'une zone d'entraînement (34) se terminant, dans la position active, dans une zone dont le rayon est plus important et que la gorge d'entraînement (30) du couvercle a un tracé qui commence par une zone d'entraînement (31), qui s'étend, à partir de la position inactive dans la zone dont le rayon est plus faible, dans la zone dont le rayon est plus important et qui est suivie d'une zone concentrique de course libre (32), dont le rayon est plus important, laquelle se termine dans la position active, alors que les zones d'entraînement (31, 34) de la gorge d'entraînement (33) de l'écran et de la gorge d'entraînement (30) du couvercle sont égales l'une à l'autre.

7. Système pour écran de bord selon l'une des revendications précédentes, **caractérisé par le fait que** deux ou plusieurs disques de commande (13) et/ou deux ou plusieurs disques d'entraînement et / ou deux ou plusieurs disques d'entraînement (15) du couvercle et/ou deux ou plusieurs disques d'entraînement (17) de l'écran, reliés respectivement par une barre (12, 16, 18) parallèle à l'axe, sont disposés parallèlement l'un à l'autre et à une certaine distance l'un de l'autre.

8. Système pour écran de bord selon la revendication 7, **caractérisé par le fait que**, entre deux disques de commande (13) liés l'un à l'autre par une barre (12), sont disposés, avec un guidage axial, un ou plusieurs disques d'entraînement (10) liés l'un à l'autre par une barre et un ou plusieurs disques d'entraînement (15) du couvercle liés l'un à l'autre par une barre (16) et un ou plusieurs disques d'entraînement (17) de l'écran liés l'un à l'autre par une barre (18).

9. Système pour écran de bord selon l'une des revendications précédentes, **caractérisé par le fait que** le disque d'entraînement (15) du couvercle et/ou le disque d'entraînement (17) de l'écran peuvent être arrêtés dans la position finale de leur zone de course libre (32, 35).

10. Système pour écran de bord selon la revendication 9, **caractérisé par le fait que** le disque d'entraînement (15) du couvercle et/ou le disque d'entraînement (17) de l'écran comportent, sur leur périphérie à rotation radiale concentrique avec l'axe, un enfoncement d'arrêt (40, 41) dans lequel une came d'arrêt (47, 48) peut entrer en prise dans le sens radial.

11. Système pour écran de bord selon la revendication 10, **caractérisé par le fait que** la came d'arrêt (47, 48) est montée sur un arbre à came (42) parallèle à l'axe, lequel arbre est entraîné en rotation par le disque d'entraînement (10).

12. Système pour écran de bord selon la revendication 11, **caractérisé par le fait que** le disque d'entraînement (10) comporte une dent radiale de déclenchement (43) qui peut s'engager dans un entredent (44) de l'arbre à came (42).

13. Système pour écran de bord selon la revendication 11 et 12, **caractérisé par le fait que** la dent de déclenchement (43) et la came d'arrêt (47, 48) pour le disque d'entraînement (15) du couvercle et le disque d'entraînement (17) de l'écran sont montées sur un arbre à came (42) commun d'une façon qui correspond à la disposition du disque d'entraînement (10), du disque d'entraînement (15) du couvercle et du disque d'entraînement (17) de l'écran.

14. Système pour écran de bord selon l'une des revendications 11 à 13, **caractérisé par le fait que** l'arbre à came (42) est monté de telle sorte qu'il peut tourner librement sur le ou les disques de commande (13).

15. Système pour écran de bord selon l'une des revendications 9 à 14, **caractérisé par le fait que** le disque d'entraînement (10) a, en parallèle près de la dent de déclenchement (43), un contour périphérique concentrique à l'axe qui comporte, à proximité de la dent de déclenchement (43), un évidement (39), dans lequel peut s'engager par rotation libre une came de blocage (45) disposée près de l'entredent (44), les flancs (46) de la came de blocage (45) étant, dans la position non engrenée de la came de blocage (45) hors de l'évidement (39), appliqués d'une façon tangentielle sur la structure périphérique du disque d'entraînement (10).

16. Système pour écran de bord selon l'une des revendications précédentes, **caractérisé par le fait que** le disque d'entraînement (15) du couvercle comporte un secteur denté (20) concentrique avec l'axe, ledit secteur entrant, pour assurer le déplacement du couvercle (5), en prise dans un pignon (21) d'une barre d'entraînement.

17. Système pour écran de bord selon l'une des revendications précédentes, **caractérisé par le fait que** le disque d'entraînement (17) de l'écran comporte un levier radial (24) qui est, par son extrémité libre, articulé sur une bielle d'entraînement (25) d'une barre d'entraînement assurant le déplacement de l'écran (4).
